# EUROPÄISCHE PATENTSCHRIFT

(11) **EP 1 082 785 B1**
(45) Veröffentlichungstag und Bekanntmachung des Hinweises auf die Patenterteilung: **01.03.2006**
(21) Anmeldenummer: 00916809.7
(22) Anmeldetag: 10.03.2000
(51) Int. Cl.: H01R 9/24, H05K 5/00, H01R 13/514, B60R 16/02

(54) **ELEKTRONISCHES STEUERGERÄT**
ELECTRONIC CONTROL DEVICE
APPAREIL DE COMMANDE ELECTRONIQUE

(30) Priorität: 23.03.1999 DE 19913146
(43) Veröffentlichungstag der Anmeldung: 14.03.2001
(73) Patentinhaber: ROBERT BOSCH GMBH, 70442 Stuttgart (DE)
(72) Erfinder: SCHELLING, Günter, D-72116 Mössingen (DE); HOCHHOLZER, Volker, D-71292 Friolzheim (DE); HERZOG, Achim, D-71522 Backnang (DE); SPACHMANN, Jürgen, D-74372 Sersheim (DE)
(74) Vertreter: Hörschler, Wolfram Johannes
(86) Internationale Anmeldenummer: PCT/DE2000/000753
(87) Internationale Veröffentlichungsnummer: WO 2000/057516

(56) Entgegenhaltungen:
- EP-A- 0 497 198
- WO-A-98/24658
- US-A- 5 137 455

## Beschreibung

Die Erfindung betrifft ein elektronisches Steuergerät entsprechend dem Oberbegriff des Anspruchs 1.

### Stand der Technik

Aus der WO 98/24658 ist ein solches Steuergerät bekannt. Neben der in diesem Steuergerät untergebrachten Steuerschaltung sind in einem Kraftfahrzeug weitere elektronische oder elektrische Schaltungselemente zu den verschiedensten Zwekken, wie z.B. für einen Temperaturfiihler für Kühlwasser einer Brennkraftmaschine, für einen Füllstandssensor eines Tanks oder für ein Stellglied einer Nockenwellenverstellung oder einer Lambdasonde vorgesehen, die mit dem Steuergerät zusammen ein Steuersystem bilden. Ein Teil dieser Schaltungselemente ist über elektrische Verbindungsleitungen mit dem Steuergerät verbunden. Der leitungstechnische Aufwand und Platzbedarf für das bekannte Steuersystem ist noch verbesserungsfähig.

Aufgabe der vorliegenden Erfindung ist es, ein Steuergerät der im Oberbegriff des Anspruchs 1 genannten Art zu schaffen, welches den leitungstechnischen Aufwand und den Platzbedarf für das Steuersystem eines Kraftfahrzeugs reduziert. Gelöst wird diese Aufgabe erfindungsgemäß durch ein Steuergerät gemäß Anspruch 1. Vorteilhafte Ausgestaltungen der Erfindung werden erfindungsgemäß durch die in den Unteransprüchen 2 bis 6 angegebenen Merkmale ermöglicht.

### Vorteile der Erfindung

Durch die erfindungsgemäße Unterbringung von Schaltungselementen im Deckel des Steuergeräts können aufwendige elektrische Verbindungsleitungen zwischen der Steuerschaltung des Steuergeräts und diesen Schaltungselementen eliminiert werden. Darüber hinaus ist die erfindungsgemäße Anordnung von Schaltungselementen im Deckel des Steuergeräts platzsparend und apparativ zweckmäßig, da auf ein gesondertes Schutzgehäuse verzichtet werden kann.

Es ist erfindungsgemäß besonders vorteilhaft, die Steuerschaltung und mindestens ein Schaltungselement durch eine Steckverbindung beim Zusammenfügen von Gehäuse und Deckel miteinander zu verbinden, so daß auf ein aufwendiges Bonden der Steuerschaltung mit mindestens einem Schaltungselement verzichtet werden kann.

Weiter ist es erfindungsgemäß besonders vorteilhaft, elektrische Verbindungsleitungen, durch welche Leistungsströme von/zu dem mindestens einen Schaltungselement fließen, mit Kontaktelementen eines im Deckel angeordneten zusätzlichen Steckers elektrisch zu verbinden, welche zur Führung von Leistungsströmen geeignet sind. Dies ermöglicht eine vorteilhafte. Trennung von Leistungsströmen und Ansteuerungsströmen und eine hiermit verbundene vorteilhafte Steckerkonzeption.

Bei einer weiteren vorteilhaften Ausgestaltung der Erfindung können weitere Bauelemente in einem weiteren Gehäuse, welches an dem Gehäuse und/oder dem Deckel vorgesehen ist, untergebracht werden.

Vorteilhafterweise ist das Steuergerät an der Brennkraftmaschine eines Kraftfahrzeugs anbringbar.

### Zeichnung

In der Zeichnung ist eine bevorzugte Ausführungsform des erfindungsgemäßen Steuergeräts dargestellt, die in der nachfolgenden Beschreibung näher erläutert ist.

Es zeigen:
- Fig. la: eine perspektivische schematische Ansicht einer Ausführungsform des Steuergeräts gemäß der Erfindung; und

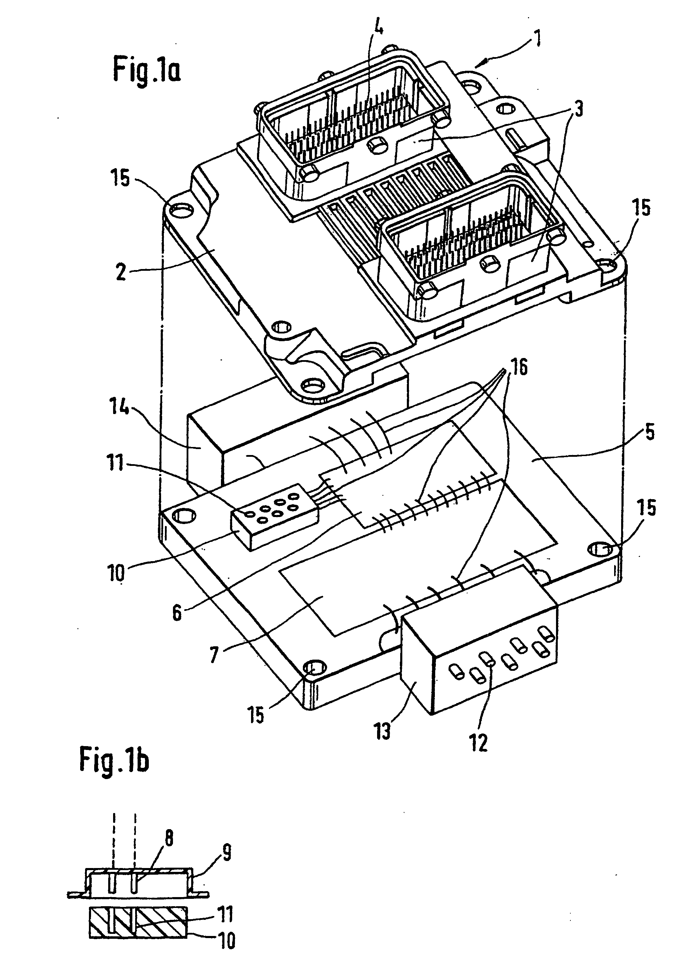

- Fig. 1b: eine schematische Querschnittsansicht der Steckverbindung zwischen der Steuerschaltung im Gehäuse und einem Schaltungselement im Deckel gemäß der Erfindung.

### Beschreibung des Ausführungsbeispiels

In Fig. 1a und 1b ist eine Ausführungsform eines Steuergeräts 1 gemäß der Erfindung gezeigt. Eine (nicht dargestellte) elektronische Steuerschaltung ist in einem Gehäuse 2 angeordnet und über Kontaktelemente 4 in einem Gerätestecker 3 und über elektrische Verbindungsleitungen (nicht dargestellt) mit verschiedenen Bauelementen, wie z.B. Zündspulen und Benzineinspritzpumpen verbunden. In einem Deckel 5 sind Schaltungselemente 6, 7 untergebracht.

Die elektrische Verbindung zwischen der Steuerschaltung und den Schaltungselementen 6, 7 erfolgt durch eine Steckverbindung mit Hilfe eines Steckers 9 mit Kontaktelementen 8 an der Steuerschaltung und eines Gegensteckers 10 mit Gegenkontaktelementen 11 im Deckel 5. Der Stecker 9 weist eine Vertiefung auf, welche den am Deckel 5 festgelegten Gegenstecker 10 aufnimmt. Das Verschließen des Gehäuses 2 mit dem Deckel 5 und die Verbindung der Steuerschaltung mit den Schaltungselementen erfolgt daher im gleichen Arbeitsschritt bei der Geräteendmontage. Die elektrische Verbindung zwischen dem Gegenstecker 10 und dem Schaltungselement 6 ist durch Bonddrähte 16 hergestellt. Kostensparend können der Stecker 9 bzw. der Gegenstecker 10 einstückig auf dem Gehäuse 2 bzw. dem Deckel 5 aus Kunststoff hergestellt werden.

Zur Führung von Leistungsströmen sind vom Schaltungselement 7 ausgehende Bonddrähte 16 mit Kontaktelementen 12 verbunden, die durch ihren größeren Querschnitt für Leistungsströme geeignet sind. Diese Kontaktelemente 12 sind in einem von den anderen Steckern getrennten Stecker 13, einem sogenannten Leistungsstecker, angeordnet.

In einem weiteren Gehäuse 14 werden Bauelemente, wie etwa Spulen, Elkos oder Folienkondensatoren, untergebracht. Diese sind durch Bonddrähte 16 mit dem Schaltungselement 6 verbunden. Das Gehäuse 14 ist als Aufsteckmodul oder als angespritzte Kunststofftasche ausgebildet.

Die elektrische Verbindung zwischen den Schaltungselementen 6 und 7 kann auf verschiedene Weise erfolgen, wie z.B. durch Bonddrähte 16.

Die Masseverbindung (nicht gezeigt) zwischen Gehäuse 2 und Deckel 5 wird durch die Verschraubung des Gehäuses 2 mit dem Deckel 5 sichergestellt. Alternativ hierzu kann die Masseverbindung durch Dorne sichergestellt werden, welche in Sacklöcher (nicht gezeigt) im Gehäuse 2 und im Deckel 5 eingefügt werden. Das Gehäuse 2 und der Deckel 5 weisen ferner Öffnungen 15 auf, die zur Befestigung des Steuergeräts 1 an der Brennkraftmaschine dienen.

### Bezugszeichenliste

- 1: Steuergerät
- 2: Gehäuse
- 3: Gerätestecker
- 4: Kontaktelement
- 5: Deckel
- 6: Schaltungselement
- 7: Schaltungselement
- 8: Kontaktelement
- 9: Stecker
- 10: Gegenstecker
- 11: Gegenkontaktelement
- 12: Kontaktelement für Leistungsströme
- 13: Leistungsstecker
- 14: Gehäuse für zusätzliche Bauelemente
- 15: Öffnung
- 16: Bonddraht

## Patentansprüche

1. Elektronisches Steuergerät (1) für ein Kraftfahrzeug mit einem Gehäuse (2), einer in dem Gehäuse (2) angeordneten elektronischen Steuerschaltung, mindestens einem an dem Gehäuse (2) festgelegten Gerätestecker (3) mit Kontaktelementen (4), die mit der Steuerschaltung verbunden sind, und einem Deckel (5),
**dadurch gekennzeichnet, daß**
in dem Deckel (5) mindestens ein Schaltungselement (6) angeordnet ist, welches mit der Steuerschaltung und/oder mit mindestens einem Kontaktelement (4) des mindestens einen Gerätestecker (3) elektrisch verbunden wird.

2. Elektronisches Steuergerät (1) nach Anspruch 1, **dadurch gekennzeichnet, daß** die Steuerschaltung über einen ihr zugeordneten Stecker (9) elektrisch mit mindestens einem Schaltungselement (6) über einen diesem zugeordneten Gegenstecker (10) verbunden ist.

3. Elektronisches Steuergerät (1) nach Anspruch 1 oder 2, **dadurch gekennzeichnet, daß** mindestens ein Schaltungselement (6) mit mindestens einem Kontaktelement (12) eines im Deckel (5) angeordneten zusätzlichen Stekkers (13) elektrisch verbunden ist, welche zur Führung von Leistungsströmen geeignet sind.

4. Elektronisches Steuergerät (1) nach mindestens einem der Ansprüche 1 bis 3, **dadurch gekennzeichnet, daß** die elektrischen Verbindungen zwischen dem mindestens einen Schaltungselement (6) und der Steuerschaltung allein zum Leiten von Ansteuerungsströmen vorgesehen sind.

5. Elektronisches Steuergerät (1) nach mindestens einem der Ansprüche 1 bis 4, **dadurch gekennzeichnet, daß** an dem Gehäuse (2) und/oder dern Deckel (5) ein weiteres Gehäuse (14) vorgesehen ist, in welchem elektrische Bauelemente untergebracht sind.

6. Elektronisches Steuergerät (1) nach Anspruch 5, **dadurch gekennzeichnet, daß** mindestens ein elektrisches Bauelement mit der Steuerschaltung und/oder mindestens einem Schaltungselement (6) verbunden ist.

7. Elektronisches Steuergerät (1) nach mindestens einem der Ansprüche 1 bis 6, **dadurch gekennzeichnet, daß** das Steuergerät an einer Brennkraftmaschine eines Kraftfahrzeugs anbringbar ist.

## Claims

1. Electronic control device (1) for a motor vehicle, having a housing (2), an electronic control circuit which is arranged in the housing (2), at least one male device connector (3) which is fixed to the housing (2) and has contact elements (4) which are connected to the control circuit, and a cover (5),
**characterized in that**
at least one circuit element (6) is arranged in the cover (5) and is electrically connected to the control circuit and/or to at least one contact element (4) of the at least one male device connector (3) when the housing and cover are joined.

2. Electronic control device (1) according to Claim 1, **characterized in that** a male connector (9) which is associated with the control circuit is used to electrically connect the latter to at least one circuit element (6) via a mating connector (10) which is associated with said circuit element.

3. Electronic control device (1) according to Claim 1 or 2, **characterized in that** at least one circuit element (6) is electrically connected to at least one contact element (12) of an additional male connector (13) which is arranged in the cover (5), which are suitable for conducting power currents.

4. Electronic control device (1) according to at least one of Claims 1 to 3, **characterized in that** the electrical connections between the at least one circuit element (6) and the control circuit are intended solely to conduct actuation currents.

5. Electronic control device (1) according to at least one of Claims 1 to 4, **characterized in that** a further housing (14) which accommodates electrical components is provided on the housing (2) and/or the cover (5).

6. Electronic control device (1) according to Claim 5, **characterized in that** at least one electrical component is connected to the control circuit and/or at least one circuit element (6).

7. Electronic control device (1) according to at least one of Claims 1 to 6, **characterized in that** the control device can be fitted to an internal combustion engine of a motor vehicle.

## Revendications

1. Appareil de commande électronique (1) pour un véhicule automobile, comprenant un boîtier (2), un circuit de commande électronique disposé dans le boîtier (2), au moins un socle connecteur (3) fixé au boîtier (2) et présentant des éléments de contact (4) reliés au circuit de commande, et un couvercle (5),
**caractérisé en ce que**
dans le couvercle (5) au moins un élément de circuit (6) est relié électriquement au circuit de commande et/ou à au moins un élément de contact (4) de l'au moins un socle connecteur (3).

2. Appareil de commande électronique (1) selon la revendication 1,
**caractérisé en ce que**
par un connecteur (9) qui lui est associé, le circuit de commande est relié électriquement à au moins un élément de circuit (6) par une contrefiche (10) associée à celui-ci.

3. Appareil de commande électronique (1) selon la revendication 1 ou 2,
**caractérisé en ce qu'**
au moins un élément de circuit (6) est relié électriquement à au moins un élément de contact (12) d'un connecteur supplémentaire (13) disposé dans le couvercle (5), et est adapté à faire passer des courants de puissance.

4. Appareil de commande électronique (1) selon au moins l'une quelconque des revendications 1 à 3,
**caractérisé en ce que**
les liaisons électriques entre au moins un élément de contact (6) et le circuit de commande sont prévues seulement pour le passage de courants de commande.

5. Appareil de commande électronique (1) selon au moins l'une quelconque des revendications 1 à 4,
**caractérisé en ce que**
sur le boîtier (2) et /ou le couvercle (5), un boîtier supplémentaire (14) est prévu, pour loger des composants électriques.

6. Appareil de commande électronique (1) selon la revendication 5,
**caractérisé en ce qu'**
au moins un composant électrique est relié au circuit de commande et/ou à au moins un élément de circuit (6).

7. Appareil de commande électronique (1) selon au moins l'une quelconque des revendications 1 à 6,
**caractérisé en ce que**
l'appareil de commande est applicable au moteur à combustion interne d'un véhicule automobile.
